# EUROPÄISCHE PATENTSCHRIFT

(11) **EP 4 069 788 B1**
(45) Veröffentlichungstag und Bekanntmachung des Hinweises auf die Patenterteilung: **30.07.2025**
(21) Anmeldenummer: 20851317.6
(22) Anmeldetag: 01.12.2020
(51) Int. Cl.: C09D 11/38, C09D 11/107

(54) **ERSATZ VON VOC DURCH DAMPFDRUCKFREIE LÖSUNGSMITTEL**
VOC SUBSTITUTE USING SOLVENTS WITH ZERO VAPOR PRESSURE
REMPLACEMENT DE COV PAR DES SOLVANTS SANS TENSION DE VAPEUR

(30) Priorität: 04.12.2019 DE 102019132982
(43) Veröffentlichungstag der Anmeldung: 12.10.2022
(73) Patentinhaber: Windmöller & Hölscher KG, 49525 Lengerich (DE)
(72) Erfinder: CORDROCH, Wolfgang, 49525 Lengerich (DE); MICHAEL, Sven, 49525 Lengerich (DE); BOOSMANN, Thomas, 49525 Lengerich (DE)
(74) Vertreter: Schneider, Bernd
(86) Internationale Anmeldenummer: PCT/DE2020/101010
(87) Internationale Veröffentlichungsnummer: WO 2021/110209

(56) Entgegenhaltungen:
- EP-A1- 1 676 894
- EP-A2- 1 695 829
- US-A- 6 048 388
- US-A1- 2016 333 211

## Beschreibung

### Gebiet der Erfindung

Die Erfindung betrifft eine (Tinten)zusammensetzung sowie die Verwendung derselben als Tinte im Tintenstrahldruckverfahren,

### Hintergrund der Erfindung

Für das Bedrucken von Kunststofffolien haben sich den druckformgebundenen Druckverfahren (insbesondere Flexodruck, Tiefdruck und Offsetdruck) mittlerweile zunehmend auch Digitaldruckverfahren etabliert, bei denen die Druckfarbe ohne Druckform - beispielsweise im Tintenstrahl-Verfahren (Inkjet-Verfahren) - auf die Folie aufgebracht wird. In allen Druckverfahren können auch wasserlösliche Druckfarbe eingesetzt werden, wie es insbesondere beim Bedrucken von Lebensmittelverpackungen vorteilhaft ist.

Kunststofffolien, zum Beispiel aus Polypropylen (PP) oder Polyethylen (PE), haben grundsätzlich eine unpolare Eigenschaft, was das Bedrucken mit wasserlöslicher und daher polarer Farbe erschwert. Gegebenenfalls kann die Haftung und Trocknung wasserlöslicher Tinte durch ein dem Bedrucken vorangehendes Aufbringen einer Vermittlungsschicht (sogenannter "Primer") auf die Folienoberfläche verbessert werden. Selbst mit Primer ist allerdings häuft eine recht aufwendige nachträgliche Endtrocknung der wasserbasierten Tinte notwendig, um mittels Verdunstung oder Konvektion die flüchtigen Bestandteile aus der Tinte zu entfernen.

Wasserbasierte Tinten des Stands der Technik umfassen neben Wasser auch wesentliche Mengen an niedrigsiedenden organischen Lösungsmitteln (VOC, Volatile Organic Compounds), gewöhnlich in Mengen von etwa 20-50 Gew.-%. Während des Druckens oder des sich dem Druckprozess anschließenden Trocknens der Tinte werden diese VOCs freigesetzt. Hieraus ergeben sich etwa die folgenden Probleme.

Zum einen sind VOCs oft gesundheitsschädlich. Insbesondere in der Massenproduktion ergeben sich hierdurch Probleme durch hohe VOCs-Emissionen am Arbeitsplatz. Darüber hinaus kann die Freisetzung von VOCs zur Bildung von explosiven und/oder brennbaren Gemischen führen. Ebenso weisen bekannte VOC enthaltende Tintensysteme oft nachteilige Trocknungseigenschaften auf, insbesondere beim Einsatz von Strahlungstrocknungssystemen und führen oft zu optischen Eigenschaften des zu druckenden Erzeugnisses, die insbesondere hinsichtlich von Glanz und Farbraum verbesserungswürdig sind. Schließlich besteht ein Verbesserungsbedarf entsprechend gedruckter Erzeugnisse hinsichtlich Haftung und Chemikalienbeständigkeit.

Es ist daher die Aufgabe der vorliegenden Erfindung eine Tintenzusammensetzung bereitzustellen, die Nachteile des Stands der Technik überwindet, insbesondere eine Tintenzusammensetzung für das Tintenstrahldruckverfahren bereitzustellen, in der die Menge von VOCs reduziert ist oder die VOC-frei ist. Als ein relevanter Stand der Technik kann die EP1676894 genannt werden.

### Überblick über die Erfindung

Diese Aufgabe wird gelöst durch den Gegenstand der unabhängigen Ansprüche. Bevorzugte Ausführungsformen ergeben sich aus den Unteransprüchen.

Die der Erfindung zugrundeliegende Aufgabe wird insbesondere gelöst durch eine Zusammensetzung umfassend: a) 50-98 Gew.-% Wasser; b) 1-49 Gew.-% einer ionischen Flüssigkeit; und c) 1-30 Gew.-% eines Pigments, eines Farbstoff oder eines Gemisches davon; jeweils bezogen auf das Gesamtgewicht der Zusammensetzung, die Zusammensetzung ferner ein Polymer, einen Vorläufer desselben oder eine Mischung des Polymers und des Vorläufers umfasst; das Polymer ein Polyacrylat ist und die Zusammensetzung ferner eine Base umfasst.

Überraschenderweise wurde durch die Erfinder festgestellt, dass niedrigsiedende organische Lösungsmittel (VOCs) in Tintenzusammensetzung für das Digitaldruckverfahren teilweise oder vollständig durch ionische Flüssigkeiten ersetzt werden können. Hierbei wurde festgestellt, dass durch die Verwendung von ionischen Flüssigkeiten anstelle von VOCs nicht nur Probleme, die mit der Emission der VOCs einhergehen, gelöst werden können, sondern dass darüber hinaus weitere Vorteile erreicht werden können. Insbesondere wurde festgestellt, dass die erfindungsgemäße Zusammensetzung die Herstellung von Druckerzeugnissen mit verbesserter Haftung und chemischer Beständigkeit der Tinte erlaubt. Ebenso wurden Vorteile hinsichtlich der Löslichkeit von Additiven, der Dispergierbarkeit von Pigmenten und Polymere, und verbesserte optische Eigenschaften des Druckerzeugnisses erreicht.

Die erfindungsgemäße Zusammensetzung ist eine wässrige Tintenzusammensetzung. Die Tintenzusammensetzung kann im Tintenstrahldruckverfahren verwendet werden. Die wässrige Tintenzusammensetzung umfasst mindestens 50 Gew.-% Wasser, hinsichtlich des Gesamtgewichts der Zusammensetzung. Alternativ kann vorgesehen sein, dass die wässrige Tintenzusammensetzung mindestens 60 Gew.-% Wasser, alternativ mindestens 70 Gew.-%, alternativ mindestens 80 Gew.-% Wasser, jeweils hinsichtlich des Gesamtgewichts der Zusanunensetzung, enthält. Es kann vorgesehen sein, dass die Zusammensetzung Wasser in einer Menge von höchstens 95 Gew.-%, alternativ höchstens 90 Gew.-%,alternativ höchstens 85 Gew.-%, jeweils bezogen auf das Gesamtgewicht der Zusammensetzung, enthält.

Es kann vorgesehen sein, dass die ionische Flüssigkeit in einer Menge von zumindest 2 Gew.-%,alternativ zumindest 3 Gew.-%,alternativ zumindest 4 Gew.-%, alternativ zumindest 5 Gew.-%, alternativ mehr als 5 Gew.-%,alternativ zumindest 5,5 Gew.-% in der Zusammensetzung enthalten ist. Ebenso kann vorgesehen sein, dass die ionische Flüssigkeit in der Zusammensetzung in einer Menge von höchstens 45 Gew.-%, alternativ höchstens 40 Gew.-%, alternativ höchstens 30 Gew.-%, alternativ höchstens 20 Gew.-%, alternativ höchstens 10 Gew.-%, alternativ höchstens 8 Gew.-% enthalten ist. Die Prozentangaben beziehen sich jeweils auf das Gesamtgewicht der Zusammensetzung.

Ebenso kann vorgesehen sein, dass das Pigment/der Farbstoff in einer Menge von mindestens 2 Gew.-%, alternativ mindestens 3 Gew.-%, alternativ mindestens 4 Gew.-%, alternativ mindestens 5 Gew.-% in der Zusammensetzung enthalten ist. Ebenso kann vorgesehen sein, dass das Pigment/der Farbstoff in einer Menge von höchstens 25 Gew.-%, alternativ höchstens 20 Gew.-%, alternativ höchstens 15 Gew.-%, alternativ höchstens 10 Gew.-%, alternativ höchstens 8 Gew.-% in der Zusammensetzung enthalten ist. Die Prozentangaben beziehen sich hierbei jeweils auf das Gesamtgewicht der Zusammensetzung.

Eine ionische Flüssigkeit ist eine ionische Verbindung (Salz), umfassend ein oder mehrere Anionen und ein oder mehrere Kationen, vorzugsweise ein Anion und ein Kation, die bei einer Temperatur von 200°C oder weniger, vorzugsweise 150°C oder weniger, darüber hinaus bevorzugt 100°C oder weniger, flüssig ist, ohne dass das Salz hierbei in einem Lösungsmittel wie Wasser gelöst ist. Erfindungsgemäß kann hierbei vorgesehen sein, dass die ionische Flüssigkeit einen Schmelzpunkt hat, der oberhalb von 60°C liegt. Ionische Flüssigkeiten sind vollständig mit Wasser mischbar. Ionische Flüssigkeiten haben keinen (messbaren) Dampfdruck, werden also auch bei hohen Temperaturen nicht in die Gasphase freigesetzt.

Beispielhafte Kationen, die erfindungsgemäß in der ionischen Flüssigkeit enthalten sein können, sind insbesondere Imidazolium, Pyridinium, Pyrrolidinium, Phosphonium, Ammonium, Guanidinium, Uronium oder Thiouronium. Vorzugsweise handelt es sich bei diesen Kationen um alkylierte Kationen.

Erfindungsgemäße Anionen sind beispielsweise Halogenide und komplexere Ionen, wie etwa Tetralfuoroborate, Trifluoracetat, Triflat, Hexafluorophosphat, Phosphinat und Tosylat in Frage. Ebenso können organische Anionen, etwa Imide oder Amide, vorgesehen sein. Bevorzugte Anionen sind I⁻, Cl⁻, Br, SCN⁻, BF₄⁻, PF₆⁻, ClO₄⁻, SbF₆⁻ (CF₃SO₂)₂N⁻, (CF₃CF₂SO₂)₂N⁻, Ph₄B⁻, (C₂H₄O₂)₂B⁻, (CF₃SO₂)₃C⁻, CF₃COO⁻, CF₃SO₃⁻, C₆F₃SO₃⁻ und MeO(EtO)₂SO₃⁻,

In einer Ausführungsform ist die ionische Flüssigkeit ein Imidazoniumsalz. Hierbei kann vorgesehen sein, dass das Imidazolium ein Dialkylimidazolium der folgenden Formel ist 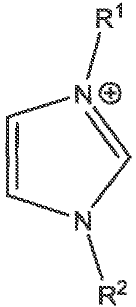 wobei R¹ und R² unabhängig voneinander ausgewählt sind aus der Gruppe bestehend aus C₁-C₈-Alkyl, vorzugsweise C₁-C₆-Alkyl, vorzugsweise C₁-C₄-Alkyl, besonders bevorzugt C₁-C₃-Alkyl am meisten bevorzugt C₁-C₂-Alkyl.

In einer Ausführungsform ist vorgesehen, dass das Kation der ionischen Flüssigkeit 1-Ethyl-₃-methylimidazolium (R¹ = Methyl und R² = Ethyl) ist.

In einer weiteren Ausführungsform ist vorgesehen, dass die ionische Flüssigkeit 1-Ethyl-₃-methylimidazoliumtetrafluoroborat ist.

Das erfindungsgemäße Pigment kann ein anorganisches Pigment oder ein organisches Pigment sein. Gebräuchliche entsprechende Pigmente sind dem Fachmann bekannt. Geeignete anorganische Pigmente umfassen insbesondere Titandioxid, rotes Eisenoxid, Antimon(V)sulfid, Cadmiumgelb, Kobaltblau, Ultramarinblau, Berliner Blau, Ruß, Graphit oder andere farbige Pigmente sowie Calciumcarbonat, Kaolin, Ton, Bariumsulfit, Aliminiumhydroxid, Talkum etc..

Geeignete organische Pigmente sind beispielsweise Azopigmente, Kupferphthalocyaninpigmente, kondensierte polycyclische Pigmente etc.. Als Farbstoffe sind prinzipiell alle Farbstoffe geeignet, die eine ausreichende Löslichkeit in dem erfindungsgemäßen wässrigen System haben.

In einer weiteren Ausführungsform kann vorgesehen sein, dass die Zusammensetzung ein oder mehrere Additive umfasst, unabhängig ausgewählt aus der Gruppe, bestehend aus Bindemitteln, Füllstoffen, Rheologieadditiven, Stabilisatoren, Tensiden, Konservierungsmitteln und Feuchthaltemitteln.

Hierbei kann vorgesehen sein, dass die Gesamtmenge an Additiv von 0,1 bis 10 Gew.-%, bezogen auf das Gesamtgewicht der Zusammensetzung ist.

Die Zusammensetzung umfasst ferner ein Polymer, einen Vorläufer desselben oder einen Mischung des Polymers und des Vorläufers.

Das Polymer, das in der erfindungsgemäßen Zusammensetzung enthalten sein kann, bzw. durch Polymerisation des Vorläufers/durch Reaktion des Vorläufers mit dem Polymer erstellt werden kann, dient als Fixierharz. Es dient der Fixierung des Pigments/des Farbstoffs auf dem zu bedruckenden Erzeugnis. In diesem Zusammenhang kann vorgesehen, sein, dass das Polymer (Fixierharz) und/oder der Vorläufer in der Zusammensetzung in einer Gesamtmenge von 0,05 Gew.-% bis 15 Gew.-%, vorzugsweise 1 Gew.-% bis 10 Gew.-%, besonders bevorzugt 5 Gew.-% bis 7 Gew.-%, bezogen auf das Gesamtgewicht der Zusammensetzung, enthalten ist.

Das Polymer ist ein Polyacrylat ist. In dieser Ausführungsform ist vorgesehen, dass der Vorläufer ein Acrylatmonomer oder Oligomere des Acrylats sind.

Ferner kann erfindungsgemäß vorgesehen sein, dass in der Ausführungsform, in der die Zusammensetzung ein Polymer und/oder einen Vorläufer davon umfasst, die Zusammensetzung ferner ein Quervernetzungsmittel umfasst, das geeignet ist, das Polymer zu vernetzen.

Die Zusammenfassung umfasst ferner eine Base. Dies kann insbesondere dann vorteilhaft sein, wenn ein Carboxylgruppen enthaltendes Fixierharz verwendet wird, um die entsprechenden Säuregruppen zu neutralisieren. Geeignete basische Verbindungen sind etwa anorganische Basen wie Natriumhydroxid, Kaliumhydroxid oder Ammoniak oder organische Basen wie Methylamin, Ethylamin, Ethanolamin, Dimethylethanolamin, Diethylethanolamin, Dibutylethanolamin, Diethylanolamin, Triethanolamin, Morpholin etc..

Hierbei kann vorgesehen sein, dass die Menge der Base 0,1 bis 5 Gew.-%, bezogen auf das Gesamtgewicht der Zusammensetzung, ist.

In einer weiteren Ausführungsform kann vorgesehen sein, dass die Zusammensetzung kein organisches Lösungsmittel umfasst. Organische Lösungsmittel im Sinne der Erfindung sind insbesondere flüchtige organische Verbindungen (VOC) und sehr flüchtige organische Verbindungen (VVOC). Organische Lösungsmittel im Sinne der vorliegenden Erfindung sind insbesondere polare organische Lösungsmittel, d.h. Lösungsmittel, die in Wasser löslich sind. Organische Lösungsmittel im Sinne der vorliegenden Erfindung (also Lösungsmittel, die vorzugsweise nicht in der Zusammensetzung enthalten sind) umfassen insbesondere Monoalkohole, Polyalkohole, Polyalkohole niedriger Alkylether, Ketone, Ether, Ester, Stickstoff enthaltende Lösungsmittel etc..

In einer weiteren Ausführungsform ist vorgesehen, dass die erfindungsgemäße Zusammensetzung kein organisches Lösungsmittel umfasst und die ionische Flüssigkeit in einer Menge von mehr als 5 Gew.-%, bezogen auf das Gesamtgewicht der Zusammensetzung, enthalten ist.

In einer weiteren Ausführungsform ist vorgesehen, dass die Zusammensetzung kein organisches Lösungsmittel umfasst und die ionische Flüssigkeit in einer Menge von 5,5 Gew.-% bis 20 Gew.-%, bezogen auf das Gesamtgewicht der Zusammensetzung, enthalten ist.

Die Aufgabe wird ferner gelöst durch ein Verfahren zum Bedrucken eines Trägers im Digitaldruckverfahren umfassend: a) Bereitstellen des Trägers; und b) Bedrucken des Träger im Digitaldruckverfahren unter Verwendung der erfindungsgemäßen Zusammensetzung als Tinte.

Als erfindungsgemäßer Träger kann hierbei insbesondere eine Kunststofffolie vorgesehen sein. In einer Ausführungsform handelt es sich bei der Kunststofffolie um eine Folie aus Polyethylen, Polypropylen oder Mischungen davon.

Das Digitaldruckverfahren, das in dem erfindungsgemäßen Verfahren angewandt wird, sowie das Verfahren in dem die erfindungsgemäße Zusammensetzung als Tinte verwendet wird, kann ein beliebiges aus dem Stand der Technik bekanntes Digitaldruckverfahren, etwa ein Tintenstrahldruckverfahren sein.

Schließlich wird die Aufgabe gelöst durch die Verwendung einer Zusammensetzung als Tinte im Digitaldruckverfahren.

### Ausführungsbeispiele

Im Folgenden soll die Erfindung anhand konkreter Ausführungsbeispiele beschrieben werden, wobei der Schutzumfang selbstverständlich nicht auf die konkreten Ausführungsbeispiele beschränkt ist.

### Vergleichsbeispiel

Eine Tintenzusammensetzung gemäß dem Stand der Technik wurde durch Mischen der folgenden Bestandteile hergestellt.

| | |
|---|---|
| Pigment Black 7 | 5.0 Massen-% |
| Wasserlösliches Acrylharz | 4.5 Massen-% |
| Isopropylalkohol (4,3 kPa/20 °C) | 5.5 Massen-% |
| Wasser | 82,0 Massen-% |
| Triethanolamin (Johncryl 7001) | 1.0 Massen-% |
| Acrylemulsion (Johneryl 7001) | 1,5 Massen-% |
| Benetzungsverbesserer (Byk 349) | 0,8 Massen-% |
| 1,2-Benzoisothiazolin-3-on | 0.2 Massen-% |

### Beispiel

Eine Tintenzusammensetzung gemäß der vorliegenden Erfindung wurde durch Mischen der folgenden Bestandteile hergestellt

| | |
|---|---|
| Pigment Black 7 | 5.0 Massen-% |
| Wasserlösliches Acrylharz | 4.5 Massen-% |
| Ethylmethylimidazol BF4 (emimbf4) | 5.5 Massen-% |
| Wasser | 82,0 Massen-% |
| Triethanolamin (Johneryl 7001) | 1.0 Massen-% |
| Acrylemulsion (Johneryl 7001) | 1,5 Massen-% |
| Benetzungsverbesserer (Byk 349) | 0,8 Massen-% |
| 1,2-Benzoisothiazolin-3-on | 0.2 Massen-% |

Die erfindungsgemäße Zusammensetzung (Beispiel) unterscheidet sich von der Zusammensetzung gemäß dem Stand der Technik (Vergleichsbeispiel) darin, dass das gemäß dem Stand der Technik verwendete organische Lösungsmittel (Isopropylalkohol) vollständig durch eine ionische Flüssigkeit (1-Ethyl-3-methylimidazoliumtetrafluoroborat) ersetzt wurde.

Die Tintenzusammensetzungen entsprechend dem Beispiel und entsprechend dem Vergleichsbeispiel wurden mittels Tintenstrahldruck auf eine Kunststofffolie aufgebracht und anschließend hinsichtlich ihrer Haftung und chemischen Beständigkeit getestet.

Die Beurteilung erfolgt nach folgender Skala:

| | | | | |
|---|---|---|---|---|
| 5 | = | 100% | = | keine Beschädigung der Beschichtung |
| 4 | = | 75% | = | geringe Beschädigung der Beschichtung |
| 3 | = | 50% | = | deutliche Beschädigung der Beschichtung |
| 2 | = | 25% | = | starke Beschädigung der Beschichtung |
| 1 | = | 0% | = | vollständiges Ablösen der Beschichtung |

Für die verschiedenen durchgeführten Tests wurden die folgenden Ergebnisse erzielt.

**Tabelle 1:**

| | *Vergleichsbeispiel* | *Beispiel* |
|---|---|---|
| Tesatest | 3 | 4-5 |
| Kratztest | 5 | 5 |
| Ethanol | 0 | 3-4 |
| Speichel | 2 | 3 |
| Dest. Wasser | 3 | 2-3 |

Wie aus der Tabelle 1 ersichtlich ist führt der Ersatz von VOCs durch ionische Flüssigkeiten in Tintenzusammensetzungen für den Digitaldruck zu signifikanten Haftungsverbesserungen von bis zu 40%. Ebenso kann eine verbesserte Chemikalienbeständigkeit erreicht werden.

Darüber hinaus wurde durch die Erfinder eine Verringerung des Energieverbrauchs der Trocknung von etwa 15% festgestellt.

## Patentansprüche

1. Verfahren zum Bedrucken eines Trägers im Digitaldruckverfahren umfassend:
a) Bereitstellen des Trägers; und
b) Bedrucken des Träger im Digitaldruckverfahren unter Verwendung einer Zusammensetzung, die umfasst:
i) 50-98 Gew.-% Wasser;
ii) 1-49 Gew.-% einer ionischen Flüssigkeit; und
iii) 1-30 Gew.-% eines Pigments, eines Farbstoff oder eines Gemisches davon;
jeweils bezogen auf das Gesamtgewicht der Zusammensetzung, wobei
der Träger eine Kunststofffolie ist;
das Digitaldruckverfahren ein Tintenstrahldruckverfahren ist;
die Zusammensetzung ferner ein Polymer, einen Vorläufer desselben oder eine Mischung des Polymers und des Vorläufers umfasst;
das Polymer ein Polyacrylat ist; und
die Zusammensetzung ferner eine Base umfasst.

2. Verfahren nach Anspruch 1, wobei die ionische Flüssigkeit ein Imidazoliumsalz ist.

3. Verfahren nach Anspruch 1 oder 2, wobei die ionische Flüssigkeit 1-Ethyl-3-methylimidazoliumtetrafluoroborat ist.

4. Verfahren nach einem der vorangehenden Ansprüche, wobei die Zusammensetzung ferner ein oder mehrere Additive umfasst, unabhängig ausgewählt aus der Gruppe, bestehend aus Bindemitteln, Füllstoffen, Rheologieadditiven, Stabilisatoren, Tensiden, Konservierungsmitteln und Feuchthaltemitteln.

5. Verfahren nach einem der vorangehenden Ansprüche, wobei die Zusammensetzung kein organisches Lösungsmittel umfasst.

6. Verwendung einer Zusammensetzung, die wie in einem der Ansprüche 1 bis 5 definiert ist, als Tinte zum Bedrucken einer Kunststofffolie im Tintenstrahldruckverfahren.

## Claims

1. Method for printing on a substrate using a digital printing method comprising:
a) providing the substrate; and
b) printing on the substrate in the digital printing method using a composition which comprises:
i) 50-98 wt.% water;
ii) 1-49 wt.% of an ionic liquid; and
iii) 1-30 wt.% of a pigment, a colorant or a mixture thereof;
each relative to the total weight of the composition, wherein
the substrate is a plastic film;
the digital printing method is an inkjet printing method;
the composition further comprises a polymer, a precursor thereof or a mixture of the polymer and the precursor;
the polymer is a polyacrylate; and
the composition further comprises a base.

2. Method according to claim 1, wherein the ionic liquid is an imidazolium salt.

3. Method according to claim 1 or 2, wherein the ionic liquid is 1-ethyl-3-methylimidazolium tetrafluoroborate.

4. Method according to any one of the preceding claims, wherein the composition further comprises one or more additives, selected independently from the group consisting of binders, fillers, rheology additives, stabilizers, surfactants, preservatives and humectants.

5. Method according to any one of the preceding claims, wherein the composition does not comprise an organic solvent.

6. Use of a composition as defined in any one of claims 1 to 5 as ink for printing on a plastic film in an inkjet printing method.

## Revendications

1. Procédé d'impression d'un support dans un procédé d'impression numérique comprenant :
a) la fourniture du support ; et
b) l'impression du support dans un procédé d'impression numérique en utilisant une composition comprenant :
i) 50-98 % en poids d'eau ;
ii) 1-49 % en poids d'un liquide ionique ; et
iii) 1-30 % en poids d'un pigment, d'un colorant ou d'un mélange de ceux-ci ;
respectivement par rapport au poids total de la composition, dans lequel
le support est un film plastique ;
le procédé d'impression numérique est un procédé d'impression à jet d'encre ;
la composition comprend en outre un polymère, un précurseur de celui-ci ou un mélange du polymère et du précurseur ;
le polymère est un polyacrylate ; et
la composition comprend en outre une base.

2. Procédé selon la revendication 1, dans lequel le liquide ionique est un sel d'imidazolium.

3. Procédé selon la revendication 1 ou 2, dans lequel le liquide ionique est du tétrafluoroborate d'1-éthyl-3-méthylimidazolium.

4. Procédé selon l'une quelconque des revendications précédentes, dans lequel la composition comprend en outre un ou plusieurs additifs indépendamment sélectionnés parmi le groupe constitué par des liants, charges, additifs rhéologiques, stabilisants, tensioactifs, conservateurs et humectants.

5. Procédé selon l'une quelconque des revendications précédentes, dans lequel la composition ne comprend aucun solvant organique.

6. Utilisation d'une composition, telle que définie selon l'une quelconque des revendications 1 à 5, en tant qu'encre pour l'impression d'un film plastique dans le procédé d'impression à jet d'encre.
